# EUROPÄISCHE PATENTANMELDUNG

(11) **EP 1 795 929 A1**
(43) Veröffentlichungstag der Anmeldung: **13.06.2007**
(21) Anmeldenummer: 05026999.2
(22) Anmeldetag: 09.12.2005
(51) Int. Cl.: G02B 6/42

(54) **Ankopplungselement zur Ankopplung einer optischen Faser an ein optoelektronisches Bauelement, optoelektronisches Modul und Verfahren zu dessen Herstellung**

(71) Anmelder: Delphi Technologies, Inc., Troy, MI 48007 (US)
(72) Erfinder: Herlitz, Martin, 42897 Remscheid (DE); Schekalla, Peter, 42329 Wuppertal (DE)
(74) Vertreter: Manitz, Finsterwald & Partner GbR

(57) **Zusammenfassung**

Die Erfindung betrifft ein Ankopplungselement zur Ankopplung von wenigstens einer optischen Faser an wenigstens ein optoelektronisches Bauelement (44), mit einem Gehäuse (10), einem Anschlusselement zum Anschluss wenigstens einer optischen Faser und einer elektromagnetischen Abschirmung zur Aufnahme und Abschirmung von wenigstens einem optoelektronischen Bauelement. Die Abschirmung ist derart angeordnet, dass zwischen einer an dem Anschlusselement (12) angeschlossenen optischen Faser und einem in der Abschirmung aufgenommenen optoelektronischen Bauelement der Austausch optischer Signale möglich ist, und umfasst wenigstens zwei Teile, von denen ein erstes Teil (20) mit dem Anschlusselement verbindbar ist und ein zweites Teil (48) nach dem Verbinden des ersten Teils mit dem Anschlusselement und Einsetzen von wenigstens einem optoelektronischen Bauelement mit dem ersten Teil oder dem Anschlusselement derart verbindbar ist, dass sich eine das wenigstens eine optoelektronische Bauelement im Wesentlichen umschließende elektromagnetische Abschirmung ergibt. Die Erfindung betrifft weiterhin ein optoelektronisches Modul mit einem erfindungsgemäßen Ankopplungselement und einem optoelektronischen Bauelement und ein Verfahren zu dessen Herstellung.

## Beschreibung

Die Erfindung betrifft ein Ankopplungselement zur Ankopplung von wenigstens einer optischen Faser an wenigstens ein optoelektronisches Bauelement.

Solche Ankopplungselemente werden z.B. verwendet, um optische Fasern mit elektrischen Schaltkreisen zu verbinden, die sich auf einer Platine befinden. Sie dienen z.B. dazu, optische Signale, die in optischen Fasern übermittelt werden, aufzunehmen und in elektrische Signale umzuwandeln. Andererseits werden solche Elemente eingesetzt, um elektrische Signale in optische Signale umzuwandeln und in optische Fasern einzuspeisen.

Dazu werden Sende- und/oder Empfängereinheiten eingesetzt, die für die Zwecke des vorliegenden Textes als optoelektronische Bauelemente bzw. FOTs (Fibre Optical Transceiver) zusammengefasst werden. Das Ankopplungselement muss sicherstellen, dass die optischen Signale entweder präzise in die FOTs eingekoppelt werden bzw. aus den FOTs in die optischen Fasern eingekoppelt werden. Außerdem müssen die FOTs gegen elektromagnetische Störeinflüsse von außen geschützt werden und elektromagnetische Störeinflüsse von den FOTs auf ihre Umgebung verhindert werden.

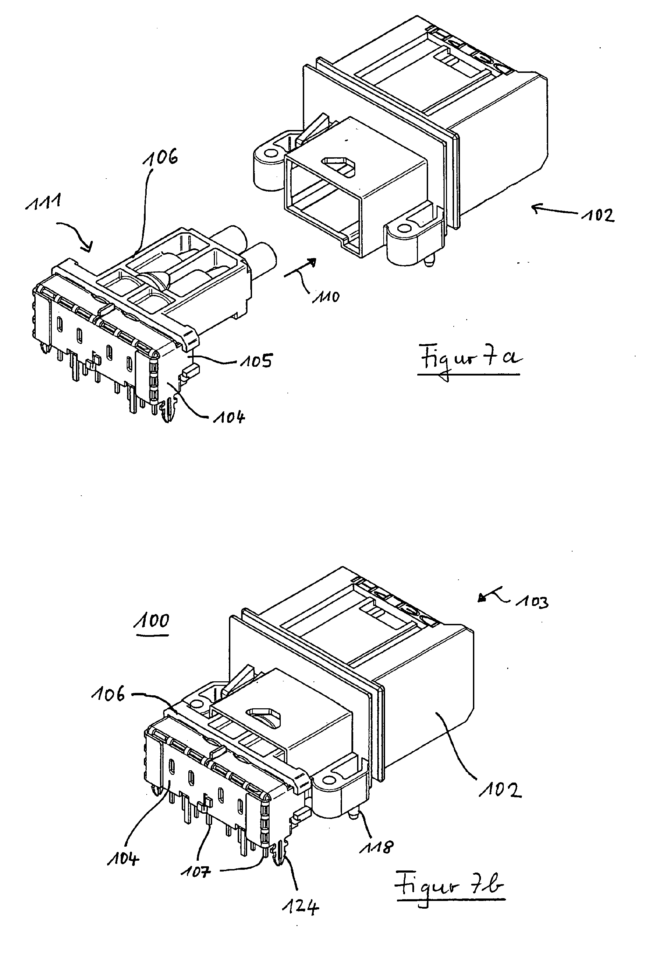

Fig. 7 zeigt zwei Schritte bei der Herstellung eines konventionellen Ankopplungselements. Die komplette Einheit 100, die in Fig. 7b in montiertem Zustand gezeigt ist, umfasst ein Konnektoraufnahmegehäuse 102, das ein z.B. aus Kunststoff gefertigtes Gehäuse umfasst. Bezugsziffer 104 bezeichnet eine aus Blech gefertigte Abschirmung, in der bei diesem Element zwei hier nicht sichtbare FOTs nebeneinander angeordnet sind. Das Konnektoraufnahmegehäuse 102 dient zur Aufnahme eines Konnektors am Ende von signalführenden optischen Fasern, die mit den FOTs Signale austauschen sollen. Dazu wird der Konnektor aus der Richtung des Pfeils 103 in das Konnektoraufnahmegehäuse 102 eingesteckt.

Die Abschirmung 104 umfasst nach unten weisende Kontaktelemente und/oder Halteelemente 124, die als elektrischer Masseanschluss bzw. zur mechanischen Befestigung an einer Platine dienen. Die in der Abschirmung 104 aufgenommenen FOTs umfassen elektrische Anschlüsse 107 zur Verbindung mit Zuleitungen auf der Platine, um elektrische Signal zu- oder abzuleiten. Der Übersichtlichkeit halber sind nur zwei Anschlüsse mit Bezugsziffer 107 versehen.

Bezugsziffer 106 bezeichnet ein Anschlusselement mit durchgehenden Bohrungen.

Das bekannte Ankopplungselement wird wie folgt montiert. Die FOTs werden in die Abschirmung 104 eingebaut, was das Biegen des Blechs um die FOTs herum umfasst. Die komplette Abschirmung mit den darin aufgenommenen FOTs wird mit Elementen 105 auf das Anschlusselement 106 aufgeschoben und z.B. verrastet. Zur Überbrückung der technischen Distanz zwischen FOTs und einzusteckendem Konnektor werden zuvor gegebenenfalls kurze optische Leiter in das Anschlusselement eingeführt. Die so gebildete und in Fig. 7a mit 111 bezeichnete Einheit wird rückseitig in Pfeilrichtung 110 in das Konnektoraufnahmegehäuse 102 eingeschoben, wodurch der Zustand der Fig. 7b entsteht. Die so gebildete Einheit kann jetzt mit Befestigungsbolzen 118 des Konnektoraufnahmegehäuses 102, Halteelementen 124 der Abschirmung 104 und elektrischen Anschlüssen 107 der FOTs mit einer Platine mechanisch verbunden und/oder verlötet werden. In das Konnektoraufnahmegehäuse 102 kann jetzt der Konnektor mit signalführenden optischen Fasern eingesteckt werden, die Signale zu den FOTs bzw. von den FOTs weg leiten können.

Für die Montage des bekannten Ankopplungselements sind dementsprechend mehrere Elemente passgenau zueinander zu führen, wobei eine entsprechende Anzahl von Prozessschritten notwendig ist. Das Einsetzen der FOTs in die Abschirmung 104 erfordert ein präzises Biegen der Abschirmung 104 um die empfindlichen FOTs, wobei es leicht zu einer Verletzung bzw. Zerstörung kommen kann.

Aufgabe der vorliegenden Erfindung ist es, ein Ankopplungselement und ein optoelektronisches Modul anzugeben, die kostengünstig sind und eine einfache und sichere Montage ermöglichen.

Diese Aufgabe wird mit einem Ankopplungselement mit den Merkmalen des Anspruchs 1 bzw. ein optoelektronisches Modul mit den Merkmalen des Anspruchs 7 gelöst. Anspruch 9 beschreibt ein Verfahren zur Herstellung eines erfindungsgemäßen optoelektronischen Moduls. Unteransprüche sind auf bevorzugte Ausgestaltungen gerichtet.

Ein erfindungsgemäßes Ankopplungselement zur Ankopplung von wenigstens einer optischen Faser an wenigstens ein optoelektronisches Bauelement umfasst ein Gehäuse, ein Anschlusselement zum Anschluss wenigstens einer optischen Faser und eine elektromagnetische Abschirmung zur Aufnahme und Abschirmung des wenigstens einen optoelektronischen Bauelements.

Die Abschirmung des erfindungsgemäßen Ankopplungselements ist derart angeordnet, dass zwischen einer an dem Anschlusselement angeschlossenen optischen Faser und einem in der Abschirmung aufgenommenen optoelektronischen Bauelement der Austausch optischer Signale möglich ist.

Die Abschirmung eines erfindungsgemäßen Ankopplungselements weist wenigstens zwei Teile auf, von denen ein erstes Teil mit dem Anschlusselement verbindbar ist und ein zweites Teil nach dem Verbinden des ersten Teils mit dem Anschlusselement und dem Einsetzen von wenigstens einem optoelektronischen Bauelement mit dem ersten Teil oder dem Anschlusselement derart verbindbar ist, dass sich eine das wenigstens eine optoelektronische Bauelement im Wesentlichen umschließende elektromagnetische Abschirmung ergibt.

Mit dem erfindungsgemäßen Ankopplungselement ist der Montageprozess sehr einfach. Zunächst wird das erste Teil der Abschirmung mit dem Anschlusselement verbunden. In das erste Teil der Abschirmung kann jetzt ohne großen Aufwand das wenigstens eine optoelektronische Bauelement eingesetzt werden. Erst im Anschluss daran wird das zweite Teil der Abschirmung aufgesetzt und mit dem ersten Teil der Abschirmung oder dem Anschlusselement direkt verkoppelt. Die zweiteilige Ausführung der elektromagnetischen Abschirmung ermöglicht also die Montage der optoelektronischen Bauelemente an dem Anschlusselement ohne dass die Abschirmung um die optoelektronischen Bauelemente herum gebogen werden müsste oder die Einheit aus Abschirmung und optoelektronischen Bauelementen in einer die optoelektronischen Bauelemente gefährdenden Weise an das Anschlusselement angefügt werden müsste.

Das Gehäuse ist vorzugsweise aus Kunststoff, z.B. als einfach herzustellendes Spritzgussteil, gefertigt. Die elektromagnetische Abschirmung kann z.B. elektrisch leitfähigen Kunststoff umfassen. Eine einfache Ausgestaltung sieht vor, dass die elektromagnetische Abschirmung ein Metallblech umfasst.

Zur Befestigung des ersten Teils der Abschirmung an dem Anschlusselement können z.B. Rastelemente vorgesehen sein, die ein Verrasten zum sicheren Halten ermöglichen. Eine besonders einfache Ausgestaltung sieht vor, dass das Anschlusselement und das erste Teil der Abschirmung wenigstens einen Haken und eine korrespondierende Öse umfassen. Die Öse muss dann nur auf den Haken aufgesteckt werden, um eine erste Verbindung zwischen dem ersten Teil der Abschirmung und dem Anschlusselement zur Verfügung zu stellen.

Bei einer Weiterbildung ist vorgesehen, dass das erste Teil der Abschirmung wenigstens eine derart verbiegbare und angeordnete Lasche aufweist, dass sie nach dem Aufstecken der wenigstens einen Öse auf dem wenigstens einen Haken und Verbiegen der Lasche ein Entfernen des ersten Teils der Abschirmung von dem Anschlusselement verhindert. Bei einer solchen Ausgestaltung müssen nur der Haken und die Öse des ersten Teils der Abschirmung und des Anschlusselements ineinander geführt werden und die wenigstens eine Lasche der Abschirmung umgebogen werden, um eine sichere Verbindung zwischen dem ersten Teil der Abschirmung und dem Anschlusselement zu gewährleisten.

Zur Überbrückung der technisch bedingten Distanz zwischen den optoelektronischen Bauelementen und anzuschließenden signalführenden optischen Fasern sind vorteilhafterweise so genannte Pigtails vorgesehen. Diese umfassen z.B. Ferrulen mit darin eingepassten in der Regel kurzen Stücken optischer Faser. Eine bevorzugte Ausführungsform des erfindungsgemäßen Ankopplungselements weist ein Anschlusselement auf, in das derartige Ferrulen eingepasst werden können. Besonders bevorzugt ist es, wenn Standardferrulen verwendet werden können.

Das Anschlusselement und das Gehäuse können zwei Teile bilden. Zum Beispiel kann das Gehäuse am Rande einer Platine befestigt werden und das Anschlusselement mit der daran in beschriebener Weise montierten Abschirmung und den darin aufgenommenen optoelektronischen Bauelementen an anderer Stelle der Platine. Eine Verbindung ist dann über entsprechend lange optische Faserstücke der Pigtails vorgesehen. Das Anschlusselement kann dann z.B. ein spritzgegossenes Kunststoffteil umfassen.

Besonders vorteilhaft ist es jedoch, wenn das Anschlusselement und das Gehäuse aus einem Stück sind. Die Montage wird dadurch zusätzlich vereinfacht und die Anzahl der Prozessschritte nimmt weiter ab. Anschlusselement und Gehäuse sind dann z.B. durch ein spritzgegossenes Kunststoffteil gebildet.

Ein erfindungsgemäßes optoelektronisches Modul weist ein erfindungsgemäßes Ankopplungselement und wenigstens ein in der Abschirmung des Ankopplungselements aufgenommenes optoelektronisches Bauelement auf, das zur Umwandlung optischer Signale einer an dem Anschlusselement angeschlossenen optischen Faser in elektrische Signale oder umgekehrt dient.

Bei einer vorteilhaften Ausführungsform ist in das Anschlusselement wenigstens eine Ferrule, vorzugsweise eine Standardferrule, eingesetzt.

Die Erfindung betrifft weiterhin ein Verfahren zum Herstellen eines erfindungsgemäßen optoelektronischen Moduls.

Die Vorteile des erfindungsgemäßen optoelektronischen Moduls, seiner Ausgestaltungen und des erfindungsgemäßen Verfahrens ergeben sich aus den oben beschriebenen Vorteilen und Ausgestaltungen des erfindungsgemäßen Ankopplungselements.

Die Erfindung wird anhand der beiliegenden Figuren im Detail erläutert. Dabei zeigt:
- Fig. 1: einen ersten Schritt bei der Herstellung einer Ausführungsform eines erfindungsgemäßen optoelektronischen Moduls,
- Fig. 2: einen zweiten Schritt bei der Herstellung dieser Ausführungsform,
- Fig. 3: einen dritten und vierten Schritt bei der Herstellung dieser Ausführungsform,
- Fig. 4: diese Ausführungsform in perspektivischer Ansicht,
- Fig. 5: einen in Fig. 4 waagerecht angeordneten Querschnitt durch die Ausführungsform des erfindungsgemäßen optoelektronischen Moduls,
- Fig. 6: einen in Fig. 4 senkrecht angeordneten Querschnitt durch die Ausführungsform des erfindungsgemäßen optoelektronischen Moduls, und
- Fig. 7: zwei Schritte bei der Herstellung eines herkömmlichen optoelektronischen Moduls.

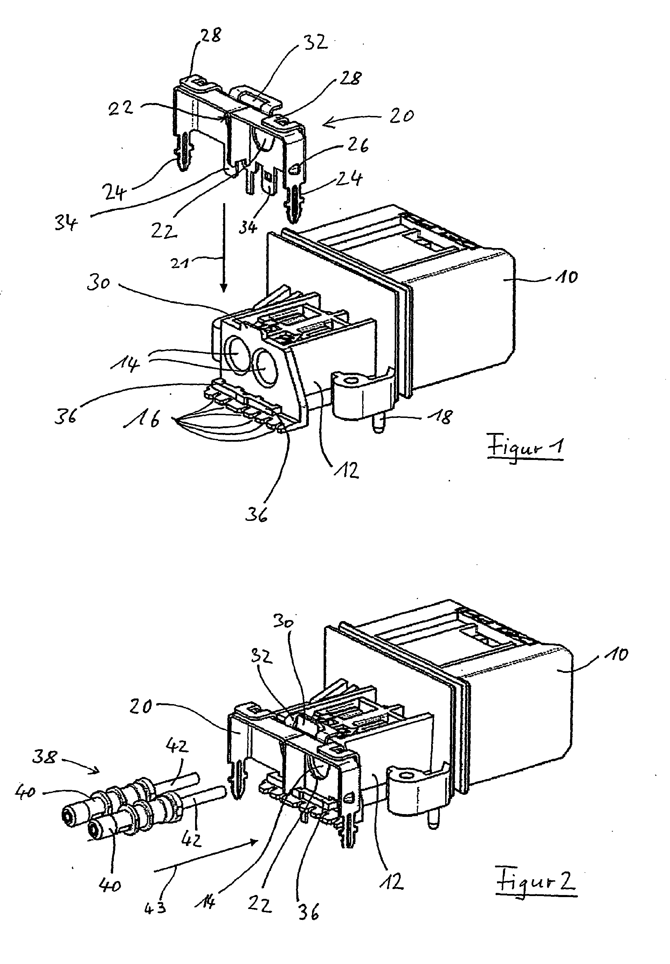

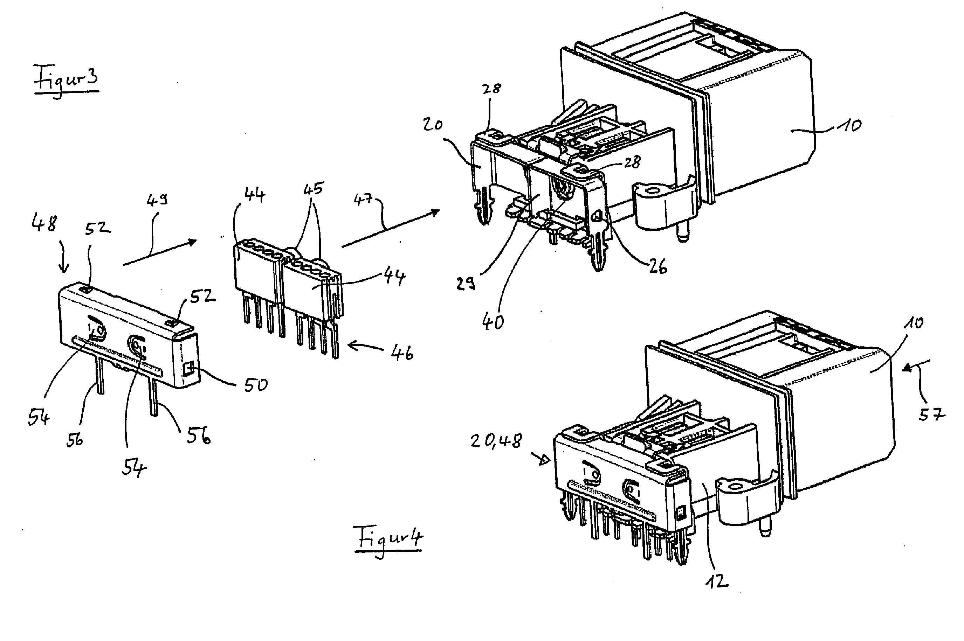

Fig. 1 bis 4 zeigen die Montage und Verwendung einer Ausführungsform eines erfindungsgemäßen optoelektronischen Moduls. In das Konnektoraufnahmegehäuse 10 kann ein hier nicht gezeigter Konnektor eingesteckt werden, der am Ende zweier optischer Fasern angeordnet ist. Das optoelektronische Modul ermöglicht die Umwandlung optischer Signale, die durch diese optischen Fasern übermittelt werden, in elektrische Signale oder umgekehrt.

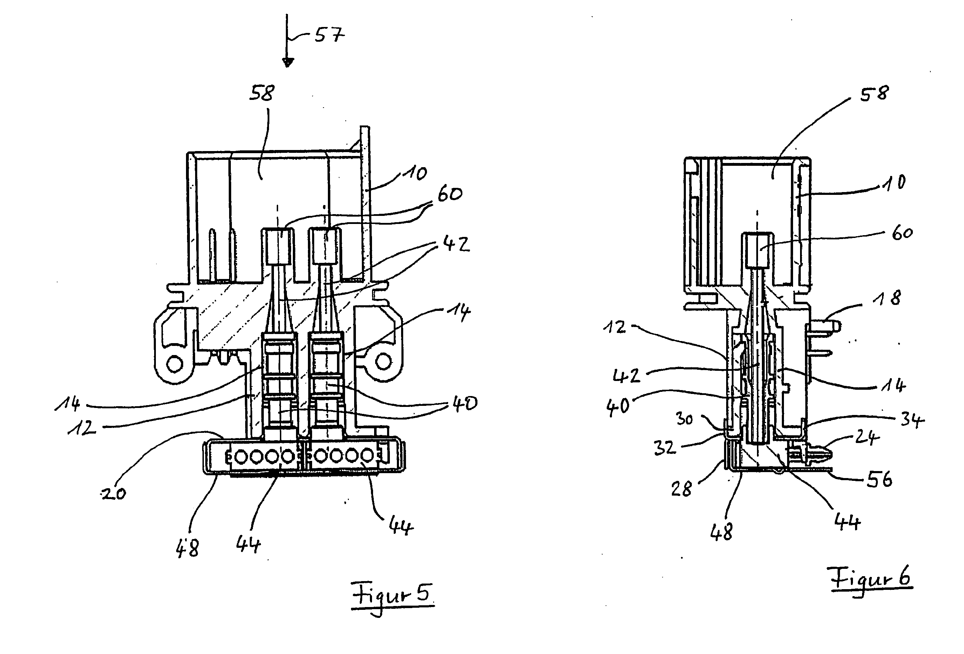

An der in Fig. 1 bis 4 sichtbaren Rückseite des Konnektoraufnahmegehäuses 10 befindet sich das Anschlusselement 12. Das Konnektoraufnahmegehäuse 10 und Anschlusselement 12 sind einstückig und sind z.B. als spritzgegossenes Kunststoffteil ausgebildet. Im Anschlusselement 12 befinden sich Ferrulenaufnahmen 14, bei der gezeigten Ausführungsform zwei. Die Ferrulenaufnahmen 14 gehen durch das Anschlussstück 12 hindurch bis zu der z.B. mit Bezug zu Fig. 5 und 6 näher erläuterten Konnektoraufnahme 58.

Bezugsziffer 16 bezeichnet Halteschlitze, in die in noch zu erläuternder Weise elektrische Anschlüsse von optoelektronischen Elementen eingepasst werden können. Die Einheit aus Konnektoraufnahmegehäuse 10 und Anschlusselement 12 kann z.B. auf einer Platine befestigt werden, wozu Befestigungsbolzen 18 dienen können.

Ein gebogenes Metallblech in Form einer Halbschale bildet das erste Teil 20 einer elektromagnetischen Abschirmung für optoelektronische Elemente. Es kann an dem Anschlussstück 12 derart befestigt werden, dass die Durchgangslöcher 22 mit den Ferrulenaufnahmen 14 des Anschlusselements 12 korrespondieren. Zur Befestigung des ersten Teils 20 der elektromagnetischen Abschirmung dient eine Öse 32, die mit dem Haken 30 des Anschlusselements 12 zusammenwirken kann, wenn das erste Teil 20 der elektromagnetischen Abschirmung in Pfeilrichtung 21 auf das Anschlusselement 12 aufgesteckt wird. Gleichzeitig treten Laschen 34 durch Ösen 36 des Anschlusselements 12 hindurch.

Bezugsziffern 26 und 28 bezeichnen Rastelemente, die in unten mit Bezug zu Fig. 3 und 4 beschriebener Weise zur Verbindung mit einem zweiten Teil 48 der elektromagnetischen Abschirmung dienen. Halteelemente 24 ermöglichen eine Verbindung mit einer nicht gezeigten Platine, auf der auch das Konnektoraufnahmegehäuse 10 mit dem Anschlusselement 12 befestigt ist. Sie dienen dabei sowohl der mechanischen Fixierung als auch der elektrischen Potentialabfuhr, wozu sie mit einer Masseleitung auf der Platine verbunden, z.B. verlötet werden. Sie dienen somit auch als Masseanschluss.

In Fig. 2 ist der Zustand gezeigt, in dem das erste Teil 20 der elektromagnetischen Abschirmung bereits an dem Anschlusselement 12 befestigt ist. Laschen 34 sind durch Ösen 36 hindurchgesteckt und in Richtung des Anschlusselements 12 umgebogen worden, so dass das erste Teil 20 der elektromagnetischen Abschirmung fest mit dem Anschlusselement 12 verbunden ist. Bezugsziffer 38 bezeichnet so genannte Pigtailelemente, die aus kurzen Stücken optischer Polymerfaser 42 mit aufgesteckten Ferrulen 40 bestehen. Sie können in Pfeilrichtung 43 durch die Durchgangslöcher 22 des ersten Teils 20 der elektromagnetischen Abschirmung in die Ferrulenaufnahmen 14 des Anschlusselements 12 eingeführt werden.

Bei den Ferrulen kann es sich um Standardferrulen 40 handeln, die keiner besonderen Ausgestaltung bedürfen.

Fig. 3 zeigt FOTs (Fibre Optical Transceiver) bzw. optoelektronische Elemente 44 mit elektrischen Anschlüssen 46. Durch die Öffnungen 45 können optische Signale eingekoppelt bzw. ausgekoppelt werden, je nachdem ob es sich bei den FOTs 44 um Empfänger oder Sender handelt.

Bezugsziffer 48 bezeichnet das zweite Teil der metallischen elektromagnetischen Abschirmung. Es weist Rastelemente 52 bzw. 50 auf, die mit den Rastelementen 28 bzw. 26 des ersten Teils 20 der elektromagnetischen Abschirmung zusammenwirken können, wenn das zweite Teil 48 auf das erste Teil 20 in Pfeilrichtung 49 aufgesteckt wird.

Eine metallische Trennwand 29 in der Abschirmung dient der Verhinderung gegenseitiger elektromagnetischer Beeinflussung der FOTs 44. Sie kann z.B. am ersten oder zweiten Teil der Abschirmung vorgesehen sein.

Metallische Halteelemente 56 dienen zum einen z.B. um eine weitere Verbindung mit der Platine herzustellen, auf der auch die Einheit aus Konnektoraufnahmegehäuse 10 und Anschlusselement 12 befestigt ist und zum anderen z.B. um eine elektrische Masseverbindung mit einer Masseleitung auf der Platine herzustellen.

Bezugsziffer 54 bezeichnet federnde Elemente, die unter leichter Vorspannung in Pfeilrichtung stehen.

Fig. 4 zeigt die Einheit aus Konnektoraufnahmegehäuse 10 mit Anschlusselement 12 und daran montierter elektromagnetischer Abschirmung 20, 48, in der sich die FOTs 44 befinden. Pfeil 57 zeigt die Einsteckrichtung, in der ein Konnektor mit signalführenden optischen Fasern in das Konnektoraufnahmegeäuse 10 zur Signalübermittlung eingesteckt wird.

Fig. 5 zeigt einen Schnitt durch die fertig montierte Einheit der Fig. 4 in waagerechter Richtung. Die Pigtail-Elemente 38 mit den optischen Polymer-Faserstücken 42 und den Ferrulen 40 sind in die Ferrulenaufnahmen 14 eingeschoben und enden an den Verbindungsbuchsen 60. Wird ein entsprechend angepasster Konnektor am Ende von signalführenden optischen Fasern in die Konnektoraufnahme 58 eingesteckt, so enden die optischen signalführenden Fasern in den Verbindungsbuchsen 60 derart, dass eine optische Signalübertragung zwischen den optischen Polymer-Faserstücken 42 der Pigtails 38 und den signalführenden optischen Fasern am Ende des Konnektors möglich ist.

Fig. 6 zeigt zur weiteren Erläuterung eine Schnittansicht durch die fertig montierte Anordnung der Fig. 4 in senkrechter Richtung.

Das erfindungsgemäße optoelektronische Modul mit einem erfindungsgemäßen, das Gehäuse 10, das Anschlusselement 12 und die elektromagnetische Abschirmung 20, 48 umfassenden Ankopplungslement wird wie folgt montiert und verwendet:
Zunächst wird gemäß Fig. 1 das erste Teil 20 der metallischen Abschirmung in Pfeilrichtung auf das Anschlusselement 12 aufgesteckt. Die Laschen 34 treten durch die Ösen 36 hindurch, während der Haken 30 durch die Öse 32 tritt. Umbiegen der Laschen 34 in Richtung des Anschlusselements 12 fixiert das erste Teil 20 der metallischen Abschirmung an dem Anschlusselement 12.

Wie es in Fig. 2 gezeigt ist, werden Pigtails 38 durch die Durchgangslöcher 22 des ersten Teils 20 der metallischen Abschirmung in die Ferrulenaufnahmen 14 des Anschlusselements 12 eingeschoben.

Fig. 3 zeigt, wie die FOTs 44 jetzt in Pfeilrichtung 47 einfach in das erste Teil 20 der elektromagnetischen Abschirmung eingesetzt werden können. Dabei treten die elektrischen Anschlüsse 46 der optoelektronische Elemente 44 in die Schlitze 16 des Anschlusselements 12. Ein besonderer Fixierungsschritt der FOTs 44 ist nicht notwendig. Die Öffnungen 45 der FOTs 44 korrespondieren jetzt mit den Enden der Ferrulen 40.

Im nächsten Schritt wird das zweite Teil 48 der elektromagnetischen Abschirmung auf das erste Teil 20 der elektromagnetischen Abschirmung aufgesteckt. Rastelemente 52 verhaken mit Rastelementen 28, während Rastelemente 26 mit entsprechenden Rastöffnungen 50 verhaken. Eine feste Verbindung zwischen dem ersten Teil 20 und dem zweiten Teil 48 der elektromagnetischen Abschirmung ist hergestellt. In der metallischen Abschirmung sind die FOTs 44 fest gehalten. Sie werden durch die federnde Wirkung der federnden Druckelemente 54 zusätzlich in Richtung der Ferrulen 40 gedrückt.

Es entsteht die fertig montierte Anordnung, die in Fig. 4 gezeigt ist. Die so gebildete Anordnung kann jetzt auf eine Platine aufgesteckt werden. Die elektrischen Anschlüsse der FOTs 44 und gegebenenfalls die Halteelemente 24, 56 der elektromagnetischen Abschirmung können mit entsprechenden Anschlüssen auf der Platine verlötet werden.

Durch die elektromagnetische Abschirmung 20, 48 ist gewährleistet, dass äußere elektromagnetische Störeinflüsse die Signalumwandlung in den FOTs 44 nicht beeinflussen und andererseits die FOTs ihre Umgebung elektromagnetisch nicht stören.

Wie beschrieben lässt sich die gesamte Anordnung einfach zusammensetzen. Insbesondere erfolgt durch die zweiteilige Ausgestaltung der elektromagnetischen Abschirmung 20, 48 ein Einsetzen der FOTs 44 ohne einen für diese empfindlichen Elemente gefährlichen Montageschritt.

Durch die einteilige Ausgestaltung von Konnektoraufnahmegehäuse 10 und Anschlusselement 12 verringert sich die notwendige Anzahl der Montageschritte zusätzlich und eine zusätzliche Justierung dieser beiden Elemente ist nicht mehr notwendig.

Nach der Montage des fertigen Ankopplungselements auf der Platine kann in die Konnektoraufnahme 58 ein Konnektor eingesteckt werden, der am Ende von signalleitenden optischen Fasern befestigt ist, die dann bei entsprechender Anpassung in die Verbindungsbuchsen 60 ragen. Durch diese optischen Fasern können jetzt optische Signale in die kurzen optischen Polymer-Faserstücke 42 der Pigtails 38 eingekoppelt werden, die das optische Signal in die FOTs 44 leiten. Dort werden sie in elektrische Signale umgewandelt und über die elektrischen Anschlüsse 46 weitergegeben.

Sind die FOTs 44 nicht wie beschrieben als Empfänger, sondern als Sender ausgestaltet, werden elektrische Signale, die durch die elektrischen Anschlüsse 46 eingespeist werden, von den FOTs in optische Signale umgewandelt. Durch Öffnungen 45 treten die so gebildeten optischen Signale in die kurzen optischen Polymer-Faserstücke 42 in den Ferrulen 14 ein, die sie in Richtung der Verbindungsbuchsen 60 leiten. Dort werden sie in die optischen Fasern eines in die Konnektoraufnahme 58 eingesteckten Konnektors weitergeleitet.

Selbstverständlich sind auch Ausgestaltungen möglich, bei denen die gezeigten FOTs 44 ein Sendeelement und ein Empfangselement umfassen.

In den gezeigten Ausführungsformen sind zwei FOTs 44 mit einer entsprechenden Anzahl von Komponenten gezeigt. Selbstverständlich sind auch Ankopplungselemente für nur einen oder mehr als zwei so gebildete Signalwege möglich.

In den Fig. 1 bis 6 und der obigen Schilderung ist die besonders bevorzugte Ausführungsform dargestellt, bei der das Konnektoraufnahmegehäuse 10 und das Anschlusselement 12 einstückig ausgebildet sind. Die Vorteile der zweiteiligen elektromagnetischen Abschirmung 20, 48 kommen jedoch auch zum Tragen, wenn das Anschlusselement 12 und das Konnektoraufnahmegehäuse 10 getrennt sind. So ist es z.B. möglich, dass die Pigtail-Elemente 38 längere optische Polymer-Faserstücke 42 aufweisen, die eine optische Verbindung zwischen einem Anschlusselement 12 und einem davon getrennten Konnektoraufnahmegehäuse 10 ermöglichen. Das Anschlusselement 12 und das Konnektoraufnahmegehäuse 10 sind dann an unterschiedlichen Stellen der Platine zu befestigen.

### Bezugszeichenliste

- 10: Konnektoraufnahmegehäuse
- 12: Anschlusselement
- 14: Ferrulenaufnahme
- 16: Halteschlitze
- 18: Befestigungsbolzen
- 20: elektromagnetische Abschirmung, erstes Teil
- 21: Aufsteckrichtung
- 22: Durchgangsloch
- 24: Halteelement, Masseanschluss
- 26, 28: Rastelemente
- 29: Trennwand
- 30: Haken
- 32: Öse
- 34: Lasche
- 36: Öse
- 38: Pigtail
- 40: Standardferrule
- 42: optisches Polymer-Faserstück
- 43: Einführrichtung
- 44: optoelektronisches Element, FOT (Fibre Optical Transceiver)
- 45: Öffnung im FOT
- 46: elektrische Anschlüsse
- 47: Einsetzrichtung
- 48: elektromagnetische Abschirmung, zweites Teil
- 49: Aufsteckrichtung
- 50, 52: Rastelemente
- 54: federndes Druckelement
- 56: Halteelement, Masseanschluss
- 57: Einsteckrichtung
- 58: Konnektoraufnahme
- 60: Verbindungsbuchse
- 100: Ankopplungselement
- 102: Konnektoraufnahmegehäuse
- 103: Einsteckrichtung
- 104: Abschirmung
- 105: Halteelement
- 106: Anschlusselement
- 107: elektrische Anschlüsse
- 110: Einschubrichtung der Einheit in das Konnektoraufnahmegehäuse
- 111: in das Konnektoraufnahmegehäuse 102 rückseitig einzuschiebende Einheit

## Patentansprüche

**1.** Ankopplungselement zur Ankopplung von wenigstens einer optischen Faser an wenigstens ein optoelektronisches Bauelement, wobei das Ankopplungselement folgendes umfasst:
a) ein vorzugsweise aus Kunststoff gefertigtes Gehäuse (10),
b) ein Anschlusselement (12) zum Anschluss wenigstens einer optischen Faser und
c) eine vorzugsweise aus Blech gefertigte elektromagnetische Abschirmung (20, 48) zur Aufnahme und Abschirmung von wenigstens einem optoelektronischen Bauelement (44), wobei
c1) die Abschirmung (20, 48) derart angeordnet ist, dass zwischen einer an dem Anschlusselement (12) angeschlossenen optischen Faser und einem in der Abschirmung (20, 48) aufgenommenen optoelektronischen Bauelement (44) der Austausch optischer Signale möglich ist, und
c2) die Abschirmung wenigstens zwei Teile (20, 48) umfasst, von denen ein erstes Teil (20) mit dem Anschlusselement (12) verbindbar ist und ein zweites Teil (48) nach dem Verbinden des ersten Teiles (20) mit dem Anschlusselement (12) und Einsetzen von wenigstens einem optoelektronischen Bauelement (44) mit dem ersten Teil (20) oder dem Anschlusselement (12) derart verbindbar ist, dass sich eine das wenigstens eine optoelektronische Bauelement (44) im Wesentlichen umschließende elektromagnetische Abschirmung (20, 48) ergibt.

**2.** Ankopplungselement nach Anspruch 1, bei dem das Anschlusselement (12) und das erste Teil (20) der Abschirmung wenigstens einen Haken (30) und eine korrespondierende Öse (32) umfassen um das Anschlusselement (12) und das erste Teil (20) der Abschirmung miteinander zu verbinden.

**3.** Ankopplungselement nach Anspruch 2, bei dem das erste Teil (20) der Abschirmung wenigstens eine derart verbiegbare und angeordnete Lasche (34) aufweist, dass sie nach Aufstecken der wenigstens einen Öse (32) auf den wenigstens einen Haken (30) und Verbiegen der Lasche (34) ein Entfernen des ersten Teiles (20) der Abschirmung von dem Anschlusselement (12) verhindert.

**4.** Ankopplungselement nach einem der Ansprüche 1 bis 3, bei dem das Anschlusselement (12) zur Aufnahme von wenigstens einer Ferrule, vorzugsweise einer Standardferrule (40), geeignet ist, die im Betriebszustand zwischen einer angekoppelten optischen Faser und einem eingesetzten optoelektronischen Bauelement (44) angeordnet ist.

**6.** Ankopplungselement nach einem der Ansprüche 1 bis 5, bei dem das Gehäuse (10) und das Anschlusselement (12) aus einem Stück sind.

**7.** Optoelektronisches Modul mit
- einem Ankopplungselement (10, 12, 20, 48) nach einem der Ansprüche 1 bis 6 und
- wenigstens einem in der Abschirmung (20, 48) des Ankopplungselementes (12) aufgenommenen optoelektronischen Bauelement (44) zur Umwandlung optischer Signale einer an dem Anschlusselement (12) angeschlossenen optischen Faser in elektrische Signale oder umgekehrt.

**8.** Optoelektronisches Modul nach Anspruch 7 mit wenigstens einer Ferrule in dem Anschlusselement, vorzugsweise einer Standardferrule (40).

**9.** Verfahren zum Herstellen eines optoelektronischen Modules nach einem der Ansprüche 7 oder 8 mit folgenden Schritten:
a) Verbinden des ersten Teiles (20) der Abschirmung mit dem Anschlusselement (12),
b) Einsetzen von wenigstens einem optoelektronischen Element (44) in das erste Teil (20) der Abschirmung und
c) Verbinden des zweiten Teiles (48) der Abschirmung mit dem ersten Teil (20) der Abschirmung oder mit dem Anschlusselement (12) derart, dass das wenigstens eine optoelektronische Element (44) von der Abschirmung im Wesentlichen umschlossen ist.

**10.** Verfahren nach Anspruch 9, bei dem vor Schritt b) wenigstens eine Ferrule, vorzugsweise eine Standardferrule (40), in das Anschlusselement (12) eingeführt wird.

## Geänderte Patentansprüche

### Geänderte Patentansprüche gemäss Regel 86(2) EPÜ.

**1.** Ankopplungselement zur Ankopplung von wenigstens einer optischen Faser an wenigstens ein optoelektronisches Bauelement, wobei das Ankopplungselement folgendes umfasst:
a) ein vorzugsweise aus Kunststoff gefertigtes Gehäuse (10),
b) ein Anschlusselement (12) zum Anschluss wenigstens einer optischen Faser und
c) eine vorzugsweise aus Blech gefertigte elektromagnetische Abschirmung (20, 48) zur Aufnahme und Abschirmung von wenigstens einem optoelektronischen Bauelement (44), wobei
c1) die Abschirmung (20, 48) derart angeordnet ist, dass zwischen einer an dem Anschlusselement (12) angeschlossenen optischen Faser und einem in der Abschirmung (20, 48) aufgenommenen optoelektronischen Bauelement (44) der Austausch optischer Signale möglich ist,
**dadurch gekennzeichnet, dass**
c2) die Abschirmung wenigstens zwei Teile (20, 48) umfasst, wobei die Abschirmung derart ausgestaltet ist, dass (i) zunächst ein erstes Teil (20) der Abschirmung mit dem Anschlusselement (12) verbunden werden kann, (ii) und im Anschluss wenigstens ein optoelektronisches Bauelement (44) eingesetzt werden kann und (iii) schließlich ein zweites Teil(48) der Abschirmung mit dem ersten Teil (20) oder dem Anschlusselement (12) verbunden werden kann, so dass sich eine das wenigstens eine optoelektronische Bauelement (44) im Wesentlichen umschließende elektromagnetische Abschirmung (20, 48) ergibt.

**2.** Ankopplungselement nach Anspruch 1, bei dem das Anschlusselement (12) und das erste Teil (20) der Abschirmung wenigstens einen Haken (30) und eine korrespondierende Öse (32) umfassen um das Anschlusselement (12) und das erste Teil (20) der Abschirmung miteinander zu verbinden.

**3.** Ankopplungselement nach Anspruch 2, bei dem das erste Teil (20) der Abschirmung wenigstens eine derart verbiegbare und angeordnete Lasche (34) aufweist, dass sie nach Aufstecken der wenigstens einen Öse (32) auf den wenigstens einen Haken (30) und Verbiegen der Lasche (34) ein Entfernen des ersten Teiles (20) der Abschirmung von dem Anschlusselement (12) verhindert.

**4.** Ankopplungselement nach einem der Ansprüche 1 bis 3, bei dem das Anschlusselement (12) zur Aufnahme von wenigstens einer Ferrule, vorzugsweise einer Standardferrule (40), geeignet ist, die im Betriebszustand zwischen einer angekoppelten optischen Faser und einem eingesetzten optoelektronischen Bauelement (44) angeordnet ist.

**5.** Ankopplungselement nach einem der Ansprüche 1 bis 4, bei dem das Gehäuse (10) und das Anschlusselement (12) aus einem Stück sind.

**6.** Optoelektronisches Modul mit
- einem Ankopplungselement (10, 12, 20, 48) nach einem der Ansprüche 1 bis 5 und
- wenigstens einem in der Abschirmung (20, 48) des Ankopplungselementes (12) aufgenommenen optoelektronischen Bauelement (44) zur Umwandlung optischer Signale einer an dem Anschlusselement (12) angeschlossenen optischen Faser in elektrische Signale oder umgekehrt.

**7.** Optoelektronisches Modul nach Anspruch 6 mit wenigstens einer Ferrule in dem Anschlusselement, vorzugsweise einer Standardferrule (40).

**8.** Verfahren zum Herstellen eines optoelektronischen Modules nach einem der Ansprüche 6 oder 6 mit folgenden Schritten in dieser Reihenfolge:
a) Verbinden des ersten Teiles (20) der Abschirmung mit dem Anschlusselement (12),
b) Einsetzen von wenigstens einem optoelektronischen Element (44) in das erste Teil (20) der Abschirmung und
c) Verbinden des zweiten Teiles (48) der Abschirmung mit dem ersten Teil (20) der Abschirmung oder mit dem Anschlusselement (12) derart, dass das wenigstens eine optoelektronische Element (44) von der Abschirmung im Wesentlichen umschlossen ist.

**9.** Verfahren nach Anspruch 8, bei dem vor Schritt b) wenigstens eine Ferrule, vorzugsweise eine Standardferrule (40), in das Anschlusselement (12) eingeführt wird.
